(19) Europäisches Patentamt
European Patent Office
Office européen des brevets

(11) **EP 3 147 138 B1**

## (12) EUROPÄISCHE PATENTSCHRIFT

(45) Veröffentlichungstag und Bekanntmachung des Hinweises auf die Patenterteilung:
**26.06.2019 Patentblatt 2019/26**

(21) Anmeldenummer: **16190732.4**

(22) Anmeldetag: **15.04.2014**

(51) Int Cl.:
*B60C 9/00* (2006.01)       *B60C 9/20* (2006.01)
*B60C 9/22* (2006.01)       *D02G 3/48* (2006.01)
*B29D 30/38* (2006.01)

(54) **FAHRZEUGLUFTREIFEN UND VERWENDUNG EINES GETWISTETEN GARNES AUS POLYAMID 6.6**

PNEUMATIC TIRE AND USE OF A TWISTED YARN COMPRISING POLYAMID 6.6

PNEUMATIQUE ET L'UTILISATION D'UN FIL RETORDU EN MATERIEL POLYAMID 6.6

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2013 DE 102013105163**

(43) Veröffentlichungstag der Anmeldung:
**29.03.2017 Patentblatt 2017/13**

(62) Dokumentnummer(n) der früheren Anmeldung(en) nach Art. 76 EPÜ:
**14718553.2 / 2 999 602**

(73) Patentinhaber: **Continental Reifen Deutschland GmbH**
**30165 Hannover (DE)**

(72) Erfinder:
• **Reese, Wolfgang**
  **31228 Peine (DE)**
• **Justine, Carole**
  **31535 Scharrel (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
DE-A1-102007 040 674       DE-A1-102008 037 615
DE-A1-102010 017 786       GB-A- 2 172 251

**Beschreibung**

Die Erfindung betrifft einen Fahrzeugluftreifen in Radialbauart mit einer Radialkarkasse, einem profilierten Laufstreifen, einem Gürtel und einer diesen bedeckenden ein- oder mehrlagigen Gürtelbandage mit in Umfangsrichtung des Reifens verlaufenden Korden, welche aus einem Garn aus Polyamid 6.6 oder aus mehreren getwisteten Garnen aus Polyamid 6.6 bestehen.

Üblicher Weise bestehen die Korde in der Gürtelbandage von Fahrzeugluftreifen für Personenkraftwagen aus getwisteten Garnen, beispielsweise aus Polyamid 6.6 mit 940 dtex oder 1400 dtex. Die Korde weisen daher einen relativ großen Durchmesser auf, wodurch auch die Bandagenlagenstärke im Reifen relativ groß ist, was letztlich im Betrieb des Reifens einen Wärmeaufbau bewirkt, welcher den Rollwiderstand des Reifens erhöht.

Ein Reifen der eingangs genannten Art ist beispielsweise aus der gattungsbildenden DE 10 2007 040 674 A1 bekannt. Der Reifen weist eine mit einem Nylonkord verstärkte Gürtelbandage auf, wobei der Nylonkord aus zwei zusammengedrehten Garnen besteht. Die Garne weisen jeweils eine Feinheit von 470 dtex auf, wobei jedes der Garne einzeln mit 300 t/m bis 500 t/m verdreht sein kann. Nylonkorde der Konstruktion 470 dtex x 2 sind dünn und gestatten die Herstellung dünner Gürtelbandagenlagen, was sich vorteilhaft auf den Rollwiderstand der Reifen auswirkt. Für eine gute Hochgeschwindigkeits-Performance müssen sie jedoch in großer Dichte verwendet werden. Bandagenlagen mit hoher Korddichte sind schwieriger zu produzieren. Darüber hinaus verursachen derartige in hoher Dichte angeordnete Korde höhere Scherkräfte im Gummimaterial der Bandagenlage. Dadurch kann die Haltbarkeit des Reifens beeinträchtigt werden.

Die DE 10 2008 037 615 A1 offenbart einen Hybridkord als Festigkeitsträger in einer Gürtelbandage eines Fahrzeugluftreifens aus zwei miteinander verdrehten Garnen, wobei das eine Garn aus Aramid und das andere Garn aus Polyamid, insbesondere Nylon, besteht.

Aus der DE 10 2010 017 786 A1 ist ein Fahrzeugluftreifen bekannt, welcher in der Gürtelbandage als Festigkeitsträger einen Kord aus zumindest zwei miteinander endverdrehten Multifilamentgarnen enthält, welche aus Polyamid 10.10 bestehen, wobei die einzelnen Multifilamentgarne eine Feinheit von jeweils 250 dtex bis 4000 dtex aufweisen. Polyamid 10.10 wird dabei gegen das üblicherweise für Garne verwendete Polyamid 6.6 ausgetauscht, da es sich durch eine hohe mechanische Festigkeit und Beständigkeit gegenüber Chemikalien auszeichnet. Aus der EP 1 475 248 B1 ist ein Fahrzeugluftreifen bekannt, dessen Gürtelbandage Hybridkorde enthält, welche aus einem ersten Garn mit einem hohen Elastizitätsmodul von zumindest 25.000 N/mm², insbesondere aus Aramid, und einem zweiten Garn mit einem niedrigen Elastizitätmodul von nicht mehr als 15.000 N/mm², insbesondere Nylon einer Feinheit ≥ 940 dtex, die miteinander endverdreht sind, bestehen. Reifen mit einer Gürtelbandage mit derartigen Festigkeitsträgern sollen eine gute Hochgeschwindigkeitshaltbarkeit und ein verbessertes Abriebsverhalten aufweisen. Aus der WO 2012/069955 A1 ist es bekannt, in der Gürtelbandage eines Fahrzeugluftreifens einen Verstärkungskord zu verwenden, welcher ebenfalls ein Hybridkord ist, welcher aus zumindest einem Garn aus Polyamid 6.6 mit einer Feinheit von 600 dtex bis 2400 dtex und aus zumindest einem Garn aus Zellulosefasern besteht, wobei die Garne miteinander verdreht sind. Ein Fahrzeugluftreifen mit diesem Kord in der Gürtelbandage soll insgesamt in seiner Performance bei hohem Komfort verbessert sein.

Der Erfindung liegt die Aufgabe zu Grunde, bei einem Reifen der eingangs genannten Art mit einer einfachen Maßnahme den Rollwiderstand zu verringern, eine gute Highspeed-Performance und eine hohe Haltbarkeit des Reifens sicherzustellen.

Gelöst wird die gestellte Aufgabe erfindungsgemäß dadurch, dass das Garn bzw. die Garne eine Feinheit von 700 dtex aufweist bzw. aufweisen und die Korde die Konstruktion 1x1, 1x2 oder 1x3 aufweisen.

Im Rahmen der Erfindung hat sich herausgestellt, dass Garne mit einer Feinheit von 700 dtex sehr gut dafür geeignet sind, die Korde in der Gürtelbandage von Fahrzeugluftreifen zu bilden. Derartige Korde werden in höherer Dichte angeordnet als die meisten Korde aus dem Stand der Technik, sodass die Gürtelbandage eine sehr gute Hochgeschwindigkeitshaltbarkeit gewährleistet. Die Korddichte braucht jedoch nicht derart hoch zu sein, dass die Produzierbarkeit der Bandagenlage erschwert ist und/oder die Scherkräfte im Gummi nachteilig hoch werden. Die Lagenstärke der Gürtelbandagenlagen mit solchen Korden ist geringer als von den meisten Bandagenlagen gemäß dem Stand der Technik, sodass das Gewicht des Reifens und der Wärmeaufbau beim Abrollen des Reifens verringert werden. Dadurch wird der Rollwiderstand des Reifens reduziert. Insgesamt sind erfindungsgemäße Korde, insbesondere solche der Konstruktion 700 dtex x 2, ein optimaler Kompromiss zur Erzielung eines niedrigen Rollwiderstand und einer hohen Haltbarkeit sowie zum Sicherstellen einer guten Prozessfähigkeit.

Als Korde in der Gürtelbandage eignen sich Korde der Konstruktion $1 \times 1$ mit einem Twistfaktor $\alpha$ von 10 bis 80, vorzugsweise 30 bis 50, ferner Korde der Konstruktionen 1x2 oder 1x3 mit einem Twistfaktor $\alpha$ von 50 bis 300, vorzugsweise 100 bis 200, wobei $\alpha =$ $\mathrm{t/m} \times \sqrt{\frac{\mathrm{dtex}}{10000}}$, mit t/m: Twists pro Meter und dtex: dtex des gesamten Kordes.

Um eine gute Gummipenetration zwischen die Korde bzw. Festigkeitsträger sicherzustellen, sollten die Festigkeitsträger innerhalb einer Bandagenlage bzw. von Bandagenlage zu Bandagenlage unter einem lichten Abstand von mindestens 0,1 mm angeordnet sein.

Die Erfindung betrifft ferner die Verwendung eines getwisteten Garnes aus Polyamid 6.6 mit einer Feinheit von 700 dtex zur Herstellung von Verstärkungskorden der Konstruktion 1x1, 1x2 oder 1x3 für zumindest eine Bandagenlage, welche den Gürtel eines Fahrzeugluftreifens in Radialbauart bedeckt.

Weitere Merkmale, Vorteile und Einzelheiten der Erfindung ergeben sich aus der nachfolgenden Beschreibung.

Erfindungsgemäße Fahrzeugluftreifen sind Reifen in Radialbauart, welche insbesondere für Personenkraftwagen vorgesehen sind. Diese Fahrzeugluftreifen weisen üblicherweise neben einer Radialkarkasse, die in Wulstbereichen durch Umschlingen zugfester Wulstkerne verankert ist, einen radial außen befindlichen, eine Profilierung aufweisenden Laufstreifen, ferner einen zwischen dem Laufstreifen und der Radialkarkasse befindlichen Gürtel aus zumindest einer Gürtellage mit gummierten Festigkeitsträgern und eine zwischen dem Laufstreifen und dem Gürtel angeordnete Gürtelbandage auf. Die ein- oder mehrlagig ausgeführte Gürtelbandage bedeckt den Gürtel und überdeckt die seitlichen Ränder der Gürtellagen. Gürtelbandagenlagen werden insbesondere als Spulbandage hergestellt, indem zumindest ein Streifen aus in eine unvulkanisierte Kautschukmischung eingebetteten Festigkeitsträgern, die in Streifenlängsrichtung und im fertigen Reifen in Umfangsrichtung des Reifens verlaufen, spiralig auf den Gürtel gewickelt wird. Die Wicklung kann derart erfolgen, dass die einzelnen Windungen des Streifens Stoß an Stoß liegen oder sich zum Teil überlappen. Des Weiteren ist eine Lückenspulung denkbar, bei der zwischen den Windungen ein kleiner Abstand verbleibt. Die Festigkeitsträger sind Korde, welche aus in sich verdrehten Garnen bestehen, wobei mehrere, beispielsweise zwei oder drei Garne zu einem Kord verdreht sein können. Die Festigkeitsträger können Einzelkorde sein, welche in einem geringen Abstand zueinander angeordnet zu einem Streifen gummiert werden. Die Korde können bei einer weiteren Ausführungsform auch in sich verdrehte Garne sein. Der minimale Abstand der Festigkeitsträger in den Kautschukmischungsstreifen beträgt 0,1 mm, vorzugsweise 0,2 mm.

Das Garn, welches in sich verdreht wird, besteht aus Polyamid 6.6 (Nylon 6.6) mit einer Feinheit von 700 dtex. Die mit diesem Garn bzw. mit Korden aus diesem Garn hergestellten Materialstreifen können wesentlich dünner ausgeführt werden als die Materialstreifen für Spulbandagen gemäß dem Stand der Technik, die beispielsweise Korde enthalten, die aus Garnen aus Polyamid 6.6 mit 940 dtex oder 1400 dtex hergestellt sind. Dadurch, dass die Dichte der Festigkeitsträger bzw. Korde in den Materialstreifen für die Spulbandage als auch in den aus diesen hergestellten Gürtelbandagenlagen wesentlich größer gewählt werden kann als in Materialstreifen bzw. Gürtelbandagenlagen nach dem Stand der Technik, weisen erfindungsgemäße Bandagenlagen eine Festigkeit auf, die mit jener von Gürtelbandagenlagen gemäß dem Stand der Technik vergleichbar ist. Die Dicke der erfindungsgemäßen Bandagenlagen und daher ihr Gewicht sind jedoch geringer als jene von Bandagenlagen gemäß dem Stand der Technik, wodurch auch das Gewicht des Fahrzeugluftreifens verringert wird. Damit geht ein geringerer Wärmeaufbau im Gürtel bzw. Laufstreifenbereich des Reifens, insbesondere bei höheren Geschwindigkeiten, einher, wodurch der Rollwiderstand des Reifens reduziert wird.

Das Garn aus Polyamid 6.6 wird getwistet als Kord in einer der Konstruktionen $1\times1$, $1\times2$ oder $1\times3$ verwendet. Der lichte Abstand der einzelnen Korde in der bzw. den Bandagenlage(n) im Reifen sollte mindestens 0,1 mm betragen, ebenso der lichte Abstand zwischen den Korden von übereinander angeordneten Bandagenlagen. Durch diesen Mindestabstand wird eine gute Gummipenetration zwischen die einzelnen Korde sichergestellt und ein gegenseitiger Kontakt der Korde vermieden.

Für Korde gemäß der Erfindung kann ein Twistfaktor $\alpha$, wie folgt definiert werden:

$$\alpha = t/m \times \sqrt{\frac{dtex}{10000}}$$

mit t/m: Twists pro Meter und
dtex: die Summe des dtex sämtlicher im Kord enthaltenen Garne, somit dtex des gesamten Kordes.

Der Twistfaktor $\alpha$ für 1x1 Konstruktionen sollte 10 bis 80, vorzugsweise 30 bis 50, betragen, der Twistfaktor $\alpha$ von 1x2- und 1x3- Konstruktionen 50 bis 300, vorzugsweise 100 bis 200.

Garne bzw. Korde gemäß der Erfindung können im Reifen zur Herstellung der Gürtelbandage auch als gummierter Einzelkord verarbeitet werden. Möglich ist auch ein Einsatz als klebrig imprägnierter Einzelkord, der somit ohne Gummierung unmittelbar auf den Rohreifen bzw. das Gürtelpaket gespult wird.

**Patentansprüche**

1. Fahrzeugluftreifen in Radialbauart mit einer Radialkarkasse, einem profilierten Laufstreifen, einem Gürtel und einer diesen bedeckenden ein- oder mehrlagigen Gürtelbandage mit in Umfangsrichtung des Reifens verlaufenden Korden, welche aus einem getwisteten Garn aus Polyamid 6.6 oder aus mehreren getwisteten Garnen aus Polyamid 6.6 bestehen,
   **dadurch gekennzeichnet,**
   **dass** das Garn bzw. die Garne eine Feinheit von 700 dtex aufweist bzw. aufweisen und die Korde die Konstruktion 1x1, 1x2 oder 1x3 aufweisen.

2. Fahrzeugluftreifen nach Anspruch 1, **dadurch gekennzeichnet, dass** Korde der Konstruktion $1\times1$

einen Twistfaktor $\alpha$ von 10 bis 80, vorzugsweise 30 bis 50, aufweisen, wobei $\alpha = t/m \times \sqrt{\frac{dtex}{10000}}$ , mit t/m: Twists pro Meter und dtex: dtex des gesamten Kordes.

3. Fahrzeugluftreifen nach Anspruch 1, **dadurch gekennzeichnet, dass** Korde der Konstruktion 1x2 oder der Konstruktion 1x3 einen Twistfaktor $\alpha$ von 50 bis 300, vorzugsweise 100 bis 200, aufweisen, wobei $\alpha = t/m \times \sqrt{\frac{dtex}{10000}}$ , mit t/m: Twists pro Meter und dtex: dtex des gesamten Kordes.

4. Fahrzeugluftreifen nach einem der Ansprüche 1 bis 3, **dadurch gekennzeichnet, dass** die Korde innerhalb einer Bandagenlage bzw. von Bandagenlage zu Bandagenlage unter einem lichten Abstand von mindestens 0,1 mm angeordnet sind.

5. Verwendung eines getwisteten Garnes aus Polyamid 6.6 mit einer Feinheit von 700 dtex zur Herstellung von Verstärkungskorden der Konstruktion 1x1, 1x2 oder 1x3 für zumindest eine Bandagenlage, welche den Gürtel eines Fahrzeugluftreifens in Radialbauart bedeckt.

## Claims

1. Pneumatic vehicle tyre of a radial type of construction comprising a radial carcass, a profiled tread, a breaker belt and a single-ply or multi-ply belt bandage covering the belt and comprising cords running in the circumferential direction of the tyre, which consist of a twisted yarn of polyamide 6.6 or a number of twisted yarns of polyamide 6.6, **characterized**
**in that** the yarn or the yarns has or have a fineness of 700 dtex and the cords have the construction $1\times1$, $1\times2$ or $1\times3$.

2. Pneumatic vehicle tyre according to Claim 1, **characterized in that** cords of the construction $1\times1$ have a twist factor $\alpha$ of 10 to 80, preferably 30 to 50, where $\alpha = t/m \times \sqrt{dtex/10000}$, with t/m: twists per metre and dtex: dtex of the entire cord.

3. Pneumatic vehicle tyre according to Claim 1, **characterized in that** cords of the construction $1\times2$ or the construction $1\times3$ have a twist factor $\alpha$ of 50 to 300, preferably 100 to 200, where $\alpha = t/m \times \sqrt{dtex/10000}$, with t/m: twists per metre and dtex: dtex of the entire cord.

4. Pneumatic vehicle tyre according to one of Claims 1 to 3, **characterized in that** the cords are arranged within a bandage ply or from bandage ply to bandage ply at a clear distance of at least 0.1 mm.

5. Use of a twisted yarn of polyamide 6.6 with a fineness of 700 dtex for producing reinforcing cords of the construction $1\times1$, $1\times2$ or $1\times3$ for at least one bandage ply which covers the breaker belt of a pneumatic vehicle tyre of a radial type of construction.

## Revendications

1. Pneumatique de véhicule de type radial avec une carcasse radiale, une bande de roulement profilée, une ceinture et un bandage de ceinture en une ou plusieurs couche(s) recouvrant celle-ci avec des cordes s'étendant dans la direction périphérique du pneumatique, qui se composent d'un fil retordu en polyamide 6.6 ou de plusieurs fils retordus en polyamide 6.6, **caractérisé en ce que** le fil ou les fils présente/présentent une finesse de 700 dtex et les cordes présentent la construction 1x1, 1x2 ou 1x3.

2. Pneumatique de véhicule selon la revendication 1, **caractérisé en ce que** des cordes de la construction 1x1 présentent un facteur de torsion $\alpha$ de 10 à 80, de préférence de 30 à 50, dans lequel $$\alpha = t/m \times \sqrt{\frac{dtex}{10000}}$$ , avec t/m: nombre de torsions par mètre et dtex: dtex de la corde totale.

3. Pneumatique de véhicule selon la revendication 1, **caractérisé en ce que** des cordes de la construction 1x2 ou de la construction 1x3 présentent un facteur de torsion $\alpha$ de 50 à 300, de préférence de 100 à 200, dans lequel $\alpha = t/m \times \sqrt{\frac{dtex}{10000}}$ , avec t/m: nombre de torsions par mètre et dtex: dtex de la corde totale.

4. Pneumatique de véhicule selon l'une quelconque des revendications 1 à 3, **caractérisé en ce que** les cordes sont disposées à l'intérieur d'une couche de bandage ou de couche de bandage à couche de bandage avec une distance libre d'au moins 0,1 mm.

5. Utilisation d'un fil retordu en polyamide 6.6 avec une finesse de 700 dtex pour la fabrication de cordes de renforcement de la construction 1x1, 1x2 ou 1x3 pour au moins une couche de bandage, qui recouvre la ceinture d'un pneumatique de véhicule de type radial.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007040674 A1
- DE 102008037615 A1
- DE 102010017786 A1
- EP 1475248 B1
- WO 2012069955 A1